# EUROPEAN PATENT APPLICATION

(11) **EP 4 418 100 A1**
(43) Date of publication of application: **21.08.2024**
(21) Application number: 23740458.7
(22) Date of filing: 11.01.2023
(51) Int. Cl.: G06F 3/14, G09F 9/302

(54) **DISPLAY DEVICE, MODULAR DISPLAY DEVICE, AND CONTROL METHOD THEREFOR**

(30) Priority: 12.01.2022 KR 20220004535
(71) Applicant: Samsung Electronics Co., Ltd., Suwon-si, Gyeonggi-do 16677 (KR)
(72) Inventor: SHIN, Kiock, Suwon-si Gyeonggi-do 16677 (KR); LEE, Jaemoon, Suwon-si Gyeonggi-do 16677 (KR)
(74) Representative: Appleyard Lees IP LLP
(86) International application number: PCT/KR2023/000529
(87) International publication number: WO 2023/136614

(57) **Abstract**

A display device is disclosed. The display device comprises a plurality of communication interfaces and one or more processors that, when a specific signal transmitted by a main control box is received through a first communication interface from among the plurality of communication interfaces, identifies the first communication interface as a communication interface receiving a signal according to a main connection path, and controls remaining communication interfaces from among the plurality of communication interfaces to output the specific signal, wherein the main connection path is a connection path for transmitting a signal transmitted by the main control box sequentially to a plurality of display devices.

## Description

### [TECHNICAL FIELD]

The disclosure relates to a display device, a modular display device, and a control method therefor, and more particularly to a display device which includes a plurality of communication interfaces, a modular display device, and a control method therefor.

### [BACKGROUND ART]

Recently, display systems of various forms are being developed and distributed.

Specifically, a number of display modules or display devices which constitute a display system is increasing proportionally according to display systems becoming large-scaled and high-resolutioned.

In the case of modular display devices, a size or form of a modular display device may be changed variously according to a number of display devices, a size of the display devices, and the like which constitute the modular display device.

Meanwhile, with respect to a plurality of display devices connected in a Daisy Chain method, when connection is severed, or an error in signal transmission occurs, the modular display device may be configured to receive a signal from each of the devices that provide a main signal and devices that provide a sub signal to prevent a problem of the plurality of display devices which are consecutively connected from not being able to receive a signal.

Meanwhile, if signals respectively output by the device that provides the main signal and the device that provides the sub signal are different, there may be a problem of the plurality of display devices constituting the modular display device outputting different images from one another or appearing as if outputting an image which is not unified.

There has been a demand for a method of operating the modular display device prioritizing the signal output by the device that provides the main signal.

### [DISCLOSURE]

### [TECHNICAL SOLUTION]

The disclosure addresses the above-described necessity, and an object of the disclosure is in providing a display device that identifies a main connection path when a plurality of display devices included in a modular display device is respectively connected according to a Daisy Chain method, a modular display device, and a control method therefor.

According to an embodiment for achieving the above-described object of the disclosure, a display device included in a modular display device constituted with a plurality of display devices includes a plurality of communication interfaces, and a processor configured to identify, based on a first specific signal transmitted by a main control box being received through a first communication interface from among the plurality of communication interfaces, the first communication interface as a communication interface to which a signal is received along a main connection path, control remaining communication interfaces for the remaining communication interfaces from among the plurality of communication interfaces to output the first specific signal, and identify, based on a second specific signal transmitted by a sub control box being received through a second communication interface from among the plurality of communication interfaces, the second communication interface as a communication interface to which a signal is received along a sub connection path, and the main connection path is a connection path for sequentially transmitting a signal transmitted by the main control box to the plurality of display devices, respectively, and the sub connection path is a connection path for sequentially transmitting a signal transmitted by the sub control box to the respective display devices, and is in a reverse order relationship with the main connection path.

In addition, the processor may be configured to identify, based on a feedback signal indicating a receipt of the first specific signal being received through the second communication interface from among the remaining communication interfaces after the respective remaining communication interfaces output the first specific signal, the second communication interface as a communication interface for transmitting the signal along the main connection path.

In addition, the processor may be configured to identify, based on a plurality of signals being received through the plurality of communication interfaces, a signal received through the first communication interface from among the plurality of signals, and control the display device based on the signal received through the first communication interface and ignore the remaining signals.

Here, the processor may be configured to control, based on there being no signal received through the first communication interface from among the plurality of signals, the display device based on the signal received through the second communication interface from among the plurality of signals.

In addition, the respective display devices may be disposed in a matrix form, the respective communication interfaces may be positioned at each of four directions based on a front surface of the display device, the first communication interface may be positioned at a first direction from among the four directions, and receives a first signal from a first another display device adjacent to the display device or transmits a second signal to the first another display device, the second communication interface may be positioned at a second direction from among three directions excluding the first direction from the four directions, and receives the second signal from a second another display device adjacent to the display device or transmits the first signal to the second another display device, and the four directions may include an upper side, a lower side, a left side, and a right side based on a front surface of the display device.

Here, the first signal may be a signal output by the main control box and sequentially transmitted to the respective display devices along the main connection path, and the second signal may be a signal output by the sub control box and sequentially transmitted to the respective display devices along the sub connection path.

In addition, the first specific signal transmitted by the main control box may include identification information for identifying the main connection path.

In addition, a memory stored with priority order information for the respective communication interfaces may be further included, and the processor may be configured to control, based on a plurality of signals being received through the plurality of communication interfaces, the display device based on a signal received through a pre-set communication interface from among the plurality of signals according to the priority order information, and update, based on the first specific signal transmitted by the main control box being received through the first communication interface, a priority order corresponding to the first communication interface in the priority order information.

According to an embodiment for achieving the above-described object of the disclosure, a control method of a display device included in a modular display device constituted with a plurality of display devices includes identifying, based on a first specific signal transmitted by a main control box being received through a first communication interface from among a plurality of communication interfaces provided in the display device, the first communication interface as a communication interface to which a signal is received along a main connection path, controlling remaining communication interfaces for the remaining communication interfaces from among the plurality of communication interfaces to output the specific signal, and identifying, based on a second specific signal transmitted by a sub control box being received through a second communication interface from among the plurality of communication interfaces, the second communication interface as a communication interface to which a signal is received along a sub connection path, and the main connection path is a connection path for sequentially transmitting a signal transmitted by the main control box to the respective display devices, and the sub connection path is a connection path for sequentially transmitting a signal transmitted by the sub control box to the respective display devices, and is in a reverse order relationship with the main connection path.

In addition, identifying, based on a feedback signal indicating a receipt of the first specific signal being received through the second communication interface from among the remaining communication interfaces after the respective communication interfaces output the first specific signal, the second communication interface as a communication interface for transmitting the signal along the main connection path may be further included.

In addition, identifying, based on a plurality of signals being received through the plurality of communication interfaces, a signal received through the first communication interface from among the plurality of signals, and controlling the display device based on the signal received through the first communication interface and ignoring the remaining signals may be further included.

Here, controlling, based on there being no signal received through the first communication interface from among the plurality of signals, the display device based on a signal received through the second communication interface from among the plurality of signals may be further included.

In addition, the respective display devices may be disposed in a matrix form, the respective communication interfaces may be positioned at each of four directions based on a front surface of the display device, the respective communication interfaces may be positioned at each of four directions based on a front surface of the display device, the first communication interface may be positioned at a first direction from among the four directions, the second communication interface may be positioned at a second direction from among three directions excluding the first direction from among the four directions, and the four directions may include an upper side, a lower side, a left side, and a right side based on a front surface of the display device, and the method may include receiving a first signal from a first another display device adjacent to the display device through the first communication interface or transmitting a second signal to the first another display device, and receiving the second signal from a second another display device adjacent to the display device through the second communication interface or transmitting the first signal to the second another display device.

Here, the first signal may be a signal output by the main control box and sequentially transmitted to the respective display devices along the main connection path, and the second signal may be a signal output by the sub control box and sequentially transmitted to the respective display devices along the sub connection path.

In addition, the first specific signal transmitted by the main control box may include identification information for identifying the main connection path.

In addition, the display device may include priority order information for the respective communication interfaces, and controlling, based on a plurality of signals being received through the plurality of communication interfaces, the display device based on a signal received through a pre-set communication interface from among the plurality of signals according to the priority order information, and updating, based on the first specific signal transmitted by the main control box being received through the first communication interface, a priority order corresponding to the first communication interface in the priority order information may be included.

According to various embodiments of the disclosure, in terms of the modular display device which includes the plurality of display devices, through which route the signal provided by the main control box is sequentially transmitted, and through which interface from among the plurality of interfaces included in the display device is the signal provided by the main control box received may be identified.

According to various embodiments of the disclosure, any one signal from among the plurality of signals may be prioritized for the plurality of display devices included in the modular display device to operate as one device.

### [DESCRIPTION OF DRAWINGS]

FIG. 1 is a diagram illustrating a connection method between a plurality of display devices according to an embodiment of the disclosure;
FIG. 2 is a diagram illustrating an example of a plurality of display devices connected in a Daisy Chain according to the related art;
FIG. 3 is a diagram illustrating an example of some display devices from among a plurality of display devices according to the related art receiving different signals;
FIG. 4 is a block diagram illustrating a configuration of a display device according to an embodiment of the disclosure;
FIG. 5 is a diagram illustrating a transmission path of a specific signal according to an embodiment of the disclosure;
FIG. 6 is a diagram illustrating a method for transmitting a specific signal to another display device by a display device according to an embodiment of the disclosure;
FIG. 7 is a diagram illustrating a method for identifying a connection path between display devices according to an embodiment of the disclosure; and
FIG. 8 is a diagram illustrating a control method of a display device according to an embodiment of the disclosure.

### [DETAILED DESCRIPTION OF EXEMPLARY EMBODIMENTS]

Terms used in the disclosure will be briefly described, and the disclosure will be described in detail.

The terms used in the embodiments of the disclosure are general terms selected that are currently widely used considering their function herein. However, the terms may change depending on intention, legal or technical interpretation, emergence of new technologies, and the like of those skilled in the related art. Further, in certain cases, there may be terms arbitrarily selected, and in this case, the meaning of the term will be disclosed in greater detail in the corresponding description. Accordingly, the terms used herein are not to be understood simply as its designation, but based on the meaning of the term and the overall context of the disclosure.

Various modifications may be made to the embodiments of the disclosure, and there may be various types of embodiments. Accordingly, specific embodiments will be illustrated in drawings, and described in detail in the detailed description. However, it should be noted that the embodiments are not for limiting the scope of the disclosure to a specific embodiment, but they should be interpreted to include all modifications, equivalents or alternatives of the embodiments included in the ideas and the technical scopes disclosed herein. In case it is determined that in describing the embodiments, detailed description of related known technologies may unnecessarily confuse the gist of the disclosure, the detailed description will be omitted.

Terms such as "first," and "second" may be used in describing the various elements, but the elements are not to be limited by the terms. The terms may be used only to distinguish one element from another.

A singular expression includes a plural expression, unless otherwise specified. It is to be understood that the terms such as "form" or "include" are used herein to designate a presence of a characteristic, number, step, operation, element, component, or a combination thereof, and not to preclude a presence or a possibility of adding one or more of other characteristics, numbers, steps, operations, elements, components or a combination thereof.

The term "module" or "part" used herein perform at least one function or operation, and may be implemented with a hardware or software, or implemented with a combination of hardware and software. In addition, a plurality of "modules" or a plurality of "parts," except for a "module" or a "part" which needs to be implemented to a specific hardware, may be integrated in at least one module and implemented as at least one processor (not shown).

Embodiments of the disclosure will be described in detail below with reference to the accompanying drawings to aid in the understanding of those of ordinary skill in the art. However, the disclosure may be realized in various different forms and it should be noted that the disclosure is not limited to the embodiments described herein. Further, parts not relevant to the description may be omitted to clearly describe the disclosure, and like reference numerals have been affixed for like parts throughout the whole disclosure.

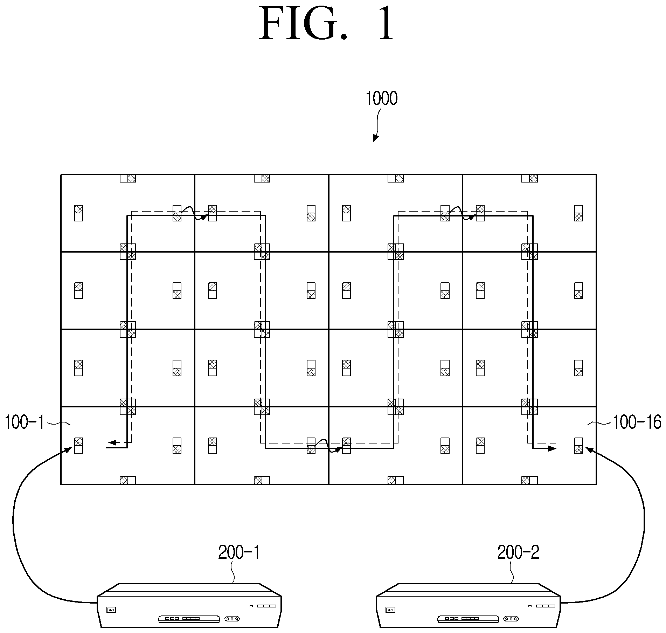

FIG. 1 is a diagram illustrating a connection method between a plurality of display devices according to an embodiment of the disclosure.

Referring to FIG. 1, a modular display device 1000 may be configured with a plurality of display devices 100-1, ..., 100-n. The modular display device 1000 may display video signals using the plurality of display devices 100-1, ..., 100-n. The modular display device 1000 may be implemented as a television (TV), but is not limited thereto, and may be applicable without limitation so long as it is a device which has a display function such as, for example, and without limitation, a video wall, a large format display (LFD), a digital signage, a digital information display (DID), a projector display, and the like. In addition, the modular display device 1000 may be implemented as a display of various forms such as, for example, and without limitation, a liquid crystal display (LCD), an organic light-emitting diode (OLED), a Liquid Crystal on Silicon (LCoS), a Digital Light Processing (DLP), a quantum dot (QD) display panel, quantum dot light-emitting diodes (QLED), and the like.

The modular display device 1000 according to an embodiment may be implemented in a form including the plurality of display devices (or, modules) 100-1, ..., 100-n. For example, as shown in FIG. 1, the plurality of display devices 100-1, ..., 100-n may be coupled to implement one display device (i.e., a display system 1000). The plurality of display devices 100-1, ..., 100-n according to an embodiment of the disclosure may respectively include a plurality of self-emissive devices. Here, a self-emissive device may be at least one from among a light emitting diode (LED) or a micro LED.

In addition, the respective display devices 100-1, ..., 100-n may be implemented as a LED cabinet which includes a plurality of light emitting diode (LED) devices. Here, a LED device may be implemented into a RGB LED, and the RGB LED may include a red LED, a green LED, and a blue LED. In addition, the LED device may additionally include a white LED in addition to the RGB LED.

In an example, the LED device may be implemented as a micro LED. Here, the micro LED may be an LED of about 5 to 100 micrometer size, and may be an ultra-small light emitting device which emits light on its own without a color filter.

The respective display devices 100-1, ..., 100-n constituting the modular display device 1000 according to an embodiment may be connected to external devices (e.g., a control device, a source device, etc.), and receive a control signal, a video signal, a sound signal, and the like from the external device.

In another example, the respective display devices 100-1, ..., 100-n provided in the modular display device 1000 may be connected to one another. For example, at least one display device that received a control signal, a video signal, a sound signal, and the like from source devices (not shown), external control devices (not shown), and the like may transmit the received control signal, video signal, sound signal, and the like to another display device which is connected in series with itself and thereby, the control signal, the video signal, the sound signal, and the like may be sequentially transmitted to all of the plurality of display devices 100-1, ..., 100-n.

In an embodiment, as a resolution, size, and the like of the modular display device 1000 increases, a number of the plurality of display devices 100-1, ..., 100-n provided in the modular display device 1000 increases proportionately, and a communication connection relationship (e.g., a connection method for the respective display devices 100-1, ..., 100-n to receive the control signal, the video signal, the sound signal, and the like from external devices) and the like between the plurality of display devices 100-1, ..., 100-n may be variously changed in addition to a standardized communication connection relationship in the related art.

The plurality of display devices 100-1, ..., 100-n according to an embodiment may be connected according to a Daisy Chain method. For example, a first display device 100-1 may be connected with a second display device 100-2, the second display device 100-2 may be connected with a third display device 100-3, and an n-1 display device 100-n-1 may be connected with an nth display device 100-n. That is, the plurality of display devices 100-1, ..., 100-n may be consecutively connected.

Referring to FIG. 1, for convenience in description, the modular display device 1000 may include a total of sixteen display devices 100-1, ..., 100-16, and has been shown assuming that first to sixteenth display devices 100-1, ..., 100-16 have been disposed in a 4 X 4 matrix form, but this is one embodiment and is not limited thereto. For example, the number of the plurality of display devices 100-1, ..., 100-n constituting the modular display device 1000 may be variously changed according to the size, resolution, and the like of the modular display device 1000, and a form in which the plurality of display devices 100-1, ..., 100-n are disposed may also be variously changed. The modular display device 1000 configured with a total of sixteen display devices 100-1, ..., 100-16 which are disposed in a 4 X 4 matrix form will be assumed and described below for convenience of description.

Referring to FIG. 1, the very first display device (e.g., the first display device 100-1) from among the first to sixteenth display devices 100-1, ..., 100-16 connected according to the Daisy Chain method may be connected with an external device (e.g., a main control box), and the very last display device (e.g., a sixteenth display device 100-16) may be connected with an external device (e.g., a sub control box).

According to an embodiment, because the first to sixteenth display devices 100-1, ..., 100-16 are connected according to the Daisy Chain method, a signal transmitted by a main control box 200-1 to the first display device 100-1 may be sequentially transmitted to the first display device 100-1 to the sixteenth display device 100-16.

A connection path for sequentially transmitting a signal output by the main control box 200-1 to the respective display devices 100-1, ..., 100-n may be referred to as a main connection path for convenience of description below, and in FIG. 1, a solid line arrow is shown connecting from the first display device 100-1 to the sixteenth display device 100-16.

Meanwhile, because the Daisy Chain method consecutively connects the plurality of display devices 100-1, ..., 100-n, if connection is severed in any one section (e.g., between a fourth display device 100-4 and a fifth display device 100-5), or if a failure in signal transmission occurs for various reasons such as an error, there is a likelihood of a problem occurring of the plurality of display devices (e.g., the fifth display device 100-5 to the nth display device 100-n) connected thereafter not being able to receive a signal.

To prevent the occurrence of the problem described above, the plurality of display devices 100-1, ..., 100-n may sequentially receive the signal transmitted by the external device through a sub connection path in addition to the main connection path.

Referring to FIG. 1, a signal transmitted by a sub control box 200-2 to the sixteenth display device 100-16 may be sequentially transmitted from the sixteenth display device 100-16 to the first display device 100-1.

A connection path for sequentially transmitting a signal output by the sub control box 200-2 to the respective display devices 100-1, ..., 100-n may be referred to as a sub connection path for convenience of description below, and in FIG. 1, a dotted line arrow is shown connecting from the sixteenth display device 100-16 to the first display device 100-1.

According to an embodiment, if an image signal output by the main control box 200-1 and an image signal output by the sub control box 200-2 are the same, the plurality of display devices 100-1, ..., 100-n may receive the image signal output by the sub control box 200-2 through the sub connection path even if connection is severed in some sections on the main connection path.

For example, even if connection is severed in any one section (e.g., between the fourth display device 100-4 and the fifth display device 100-5) on the main connection path, or a failure in signal transmission occurs by various reasons such as an error, the plurality of display devices (e.g., the fifth display device 100-5 to the nth display device 100-n) connected thereafter may receive the signal output by the sub control box 200-2 through the sub connection path. Accordingly, because the respective display devices 100-1, ..., 100-n receive at least one from among the signal output by the main control box 200-1 or the signal output by the sub control box 200-2, the modular display device 1000 configured with the plurality of display devices 100-1, ..., 100-n may output an image corresponding to the signal without error.

However, if the respective display devices 100-1, ..., 100-n receive a plurality of signals according to an embodiment, the respective display devices 100-1, ..., 100-n may have to classify (or identify) the signal output by the main control box 200-1 or the signal output by the sub control box 200-2 from among the plurality of signals, and there may be need to perform an operation prioritizing the signal output by the main control box 200-1. Detailed descriptions thereof will be described below.

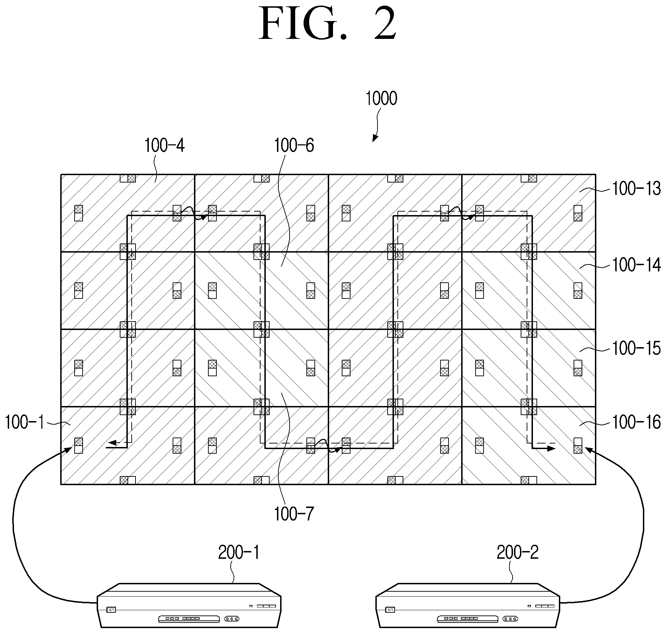

FIG. 2 is a diagram illustrating an example of a plurality of display devices connected in a Daisy Chain according to the related art.

Referring to FIG. 2, the first to sixteenth display devices 100-1, ..., 100-16 may respectively receive the signal output by the main control box 200-1 through the main connection path, and receive the signal output by the sub control box 200-2 through the sub connection path simultaneously. If the main control box 200-1 and the sub control box 200-2 output the same signal (e.g., same image signal), the first to sixteenth display devices 100-1, ..., 100-16 may respectively receive the same plurality of signals.

Meanwhile, if the main control box 200-1 and the sub control box 200-2 output different signals, there may be a problem of some display devices performing an operation based on the signal output by the main control box 200-1 and remaining display devices performing an operation based on the signal output by the sub control box 200-2 despite the first to sixteenth display devices 100-1, ..., 100-16 having to respectively perform an operation based on the signal output by the main control box 200-1 and the first to sixteenth display devices 100-1, ..., 100-16 not being able to respectively identify whether which signal from among the plurality of signals is the signal output by the main control box 200-1.

For example, referring to FIG. 2, a display device 100 may be provided with a plurality of communication interfaces. According to an embodiment, a first communication interface from among the plurality of communication interfaces may receive the signal transmitted by the main control box 200-1 from the main control box 200-1 or another display device adjacently positioned along the main connection path.

In addition, a second communication interface from among the plurality of communication interfaces may receive the signal transmitted by the sub control box 200-2 from the sub control box 200-2 or another display device adjacently positioned along the sub connection path.

Because the display device 100 according to an embodiment is not able to differentiate the main connection path and the sub connection path between the plurality of display devices 100-1, ..., 100-n constituting the modular display device 1000, the display device 100 may not be able to classify the signal output by the main control box 200-1 and the signal output by the sub control box 200-2 from among signals received through the first communication interface and signals received through the second communication interface.

Accordingly, the display device 100 may perform an operation prioritizing a signal received from a specific communication interface from among the plurality of communication interfaces.

For example, the display device 100 may include a total of four communication interfaces positioned at each of four directions based on the front surface, and a priority order has been set for the respective four communication interfaces. In an example, the display device 100 may set a first priority order to the first communication interface positioned at a left side of the front surface thereof, set a second priority order to the second communication interface positioned at a lower side thereof, set a third priority order to a third communication interface positioned at a right side thereof, and set a fourth priority order to a fourth communication interface positioned at an upper side thereof. Here, the priority order is an example for convenience of description, and is not limited hereto. For example, the priority order may be changed according to a manufacturer, a user, and the like.

Accordingly, a sixth display device 100-6 may perform, based on both the signal output by the main control box 200-1 and the signal output by the sub control box 200-2 being received, an operation using the signal output by the sub control box 200-2 (signal received from the second communication interface positioned at the lower side thereof) from among the signal output by the main control box 200-1 (signal received from the fourth communication interface positioned at the upper side thereof) and the signal output by the sub control box 200-2 (signal received from the second communication interface positioned at the lower side thereof) according to a set priority order.

Referring to FIG. 2, the first to fifth display devices 100-1, ..., 100-5, and eighth to thirteenth display devices 100-8, ..., 100-13 according to the set priority order may perform an operation using the signal output by the main control box 200-1, and sixth, seventh, and fourteenth to sixteenth display devices 100-6, 100-7, 100-14, ..., 100-16 may perform an operation using the signal output by the sub control box 200-2.

Meanwhile, if the signal output by the main control box 200-1 and the signal output by the sub control box 200-2 are the same (e.g., both signals are a same image signal), because the first to sixteenth display devices 100-1, ..., 100-16 perform an operation using the same signal, there may be no problem due to the first to sixteenth display devices 100-1, ..., 100-16 constituting the modular display device 1000 operating in unified manner.

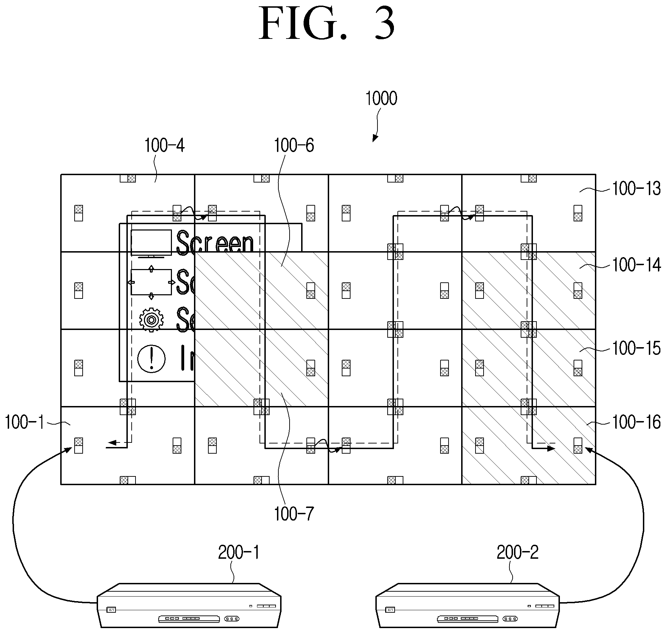

However, if the signal output by the main control box 200-1 and the signal output by the sub control box 200-2 are different, because the first to fifth display devices 100-1, ..., 100-5 and the eighth to thirteenth display devices 100-8, ..., 100-13 which perform an operation using the signal output by the main control box 200-1 and the sixth, seventh, and fourteenth to sixteenth display devices 100-6, 100-7, 100-14, ..., 100-16 which perform an operation using the signal output by the sub control box 200-2 operate differently, there may be a problem of the first to sixteenth display devices 100-1, ..., 100-16 constituting the modular display device 1000 not operating in the unified manner. Descriptions thereof will be provided with reference to FIG. 3.

FIG. 3 is a diagram illustrating an example of some display devices from among a plurality of display devices according to the related art receiving different signals.

The main control box 200-1 and the sub control box 200-2 according to an embodiment of the disclosure may be same in that both provide an image signal to the modular display device 1000, but may be different in that changing in a setting value of the modular display device 1000, and providing a main control signal associated with an operation of the modular display device 1000 are performed by the main control box 200-1 and not performed by the sub control box 200-2. However, the above is one example for convenience of description, and the embodiment is not limited thereto. The sub control box 200-2 may also change the setting value of the modular display device 1000 as same as the main control box 200-1, or provide the main control signal associated with an operation of the main control box 200-1.

The signal output by the main control box 200-1 according to an embodiment may be an image signal or an on screen display (OSD) menu display signal for adjusting the setting value of the modular display device 1000 constituted with the plurality of display devices 100-1, ..., 100-n. The signal output by the sub control box 200-2 may be the image signal.

In this case, the first to fifth display devices 100-1, ..., 100-5 and the eighth to thirteenth display devices 100-8, ..., 100-13 which perform an operation using the signal output by the main control box 200-1 according to the priority order set in FIG. 2 may display an image and an OSD menu.

However, as shown in FIG. 3, the sixth, seventh, and fourteenth to sixteenth display devices 100-6, 100-7, 100-14, ..., 100-16 which perform an operation using the signal output by the sub control box 200-2 may display an image, and may not display the OSD menu.

Accordingly, there is a need for the sixth, seventh, and fourteenth to sixteenth display devices 100-6, 100-7, 100-14, ..., 100-16 to perform an operation using the signal transmitted by the main control box 200-1 along the main connection path, rather than a signal received by a specific communication interface according to the set priority order.

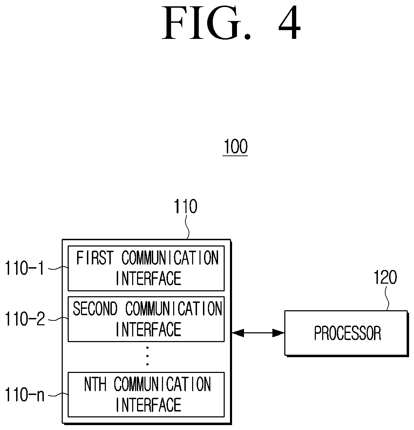

FIG. 4 is a block diagram illustrating a configuration of a display device according to an embodiment of the disclosure.

Referring to FIG. 4, the display device 100 may include a plurality of communication interfaces 110 and a processor 120.

The display device 100 according to an embodiment of the disclosure may be one from among the plurality of display devices 100-1, ..., 100-n constituting the modular display device 1000 (i.e., a display system), may be implemented as an independent display device 100 on its own, and include a plurality of display modules.

For convenience of description below, the modular display device 1000 has been described as including the plurality of display devices 100-1, ..., 100-n, and the respective display devices 100-1, ..., 100-n have been described as including first to nth communication interfaces 110-1, ..., 110-n and the processor 120.

Each of the first to nth communication interfaces 110-1, ..., 110-n according to an embodiment may perform communication with external devices (e.g., the main control box 200-1, the sub control box 200-2, a step top box, etc.), and an adjacent another display device 100'.

The respective communication interfaces 110 may receive input of various signals and data. For example, the respective communication interfaces 110 may perform communication with at least one external device (e.g., the main control box 200-1, the sub control box 200-2, the step top box, etc.) provided within a home through various wired or wireless communication methods that use radio frequency (RF), infrared (IR), and the like such as, for example, and without limitation, an AP-based Wi-Fi (Wireless LAN network), Bluetooth, ZigBee, a wired/wireless local area network (LAN), a wide area network (WAN), Ethernet, IEEE 1394, a high-definition multimedia interface (HDMI), a universal serial bus (USB), a mobile high-definition link (MHL), Audio Engineering Society/European Broadcasting Union (AES/EBU), Optical, Coaxial, a near field communication (NFC), or the like, and also perform communication with another display device 100' adjacent to the display device 100 from among the plurality of display devices 100-1, ..., 100-n.

For example, the respective communication interfaces 110 may be implemented with a wired communication interface such as, for example, and without limitation, a V-by-One, a high-definition multimedia interface (HDMI) cable, a low voltage differential signals (LVDS) cable, a digital visual interface (DVI) cable, a D-subminiature (D-SUB) cable, a video graphics array (VGA) cable, an optical cable, and the like.

For example, as shown in FIG. 1, the first display device 100-1 may perform communication with the main control box 200-1 through a first communication interface 110-1, and receive a control signal for controlling the modular display device 1000, an image signal, and the like from the main control box 200-1.

In addition, as shown in FIG. 1, the sixteenth display device 100-16 may perform communication with the sub control box 200-2 through a third communication interface 110-3, and receive an image signal, and the like from the sub control box 200-2.

As described above, each of the main control box 200-1 and the sub control box 200-2 may operate as a source device providing an image signal to the modular display device 1000, and each of the main control box 200-1 and the sub control box 200-2 may perform communication with a separate source device providing an image signal received from the source device to the modular display device 1000.

In addition, each of the main control box 200-1 and the sub control box 200-2 may be connected with an outlet positioned at a wall via wire, and provide driving power to the modular display device 1000.

The processor 120 may be electrically connected with a memory (not shown), and control the overall operation of the display device 100.

According to an embodiment of the disclosure, the processor 120 may be implemented as a digital signal processor (DSP) for processing a digital image signal, a microprocessor, or a time controller (TCON). However, the embodiment is not limited thereto, and may include one or more from among a central processing unit (CPU), a micro controller unit (MCU), a micro processing unit (MPU), a controller, an application processor (AP), a communication processor (CP), an ARM processor, or an artificial intelligence (AI) processor, or may be defined by the corresponding term. In addition, the processor 120 may be implemented as a System on Chip (SoC) or a large scale integration (LSI) in which a processing algorithm is embedded, and may be implemented in the form of a field programmable gate array (FPGA). The processor 120 may perform various functions by executing computer executable instructions stored in the memory (not shown).

As described in FIG. 3, if the display device 100 is not able to differentiate the main connection path and the sub connection path between the plurality of display devices 100-1, ..., 100-n constituting the modular display device 1000, there may be a problem of the display device 100 not being able to classify the signal output by the main control box 200-1 and the signal output by the sub control box 200-2 from among signals received through the first communication interface and signals received through the second communication interface.

The processor according to an embodiment of the disclosure may identify, based on a specific signal (e.g., a first specific signal) transmitted by the main control box 200-1 being received through the first communication interface 110-1 from among the plurality of communication interfaces 110, the first communication interface 110-1 as the communication interface to which the signal output by the main control box 200-1 is received along the main connection path.

Here, the specific signal transmitted by the main control box 200-1 may include identification information for identifying the main connection path. For example, the specific signal transmitted by the main control box 200-1 may include identification information indicating that the corresponding specific signal has been transmitted from the main control box 200-1, and may be different from the signal output from the sub control box 200-2.

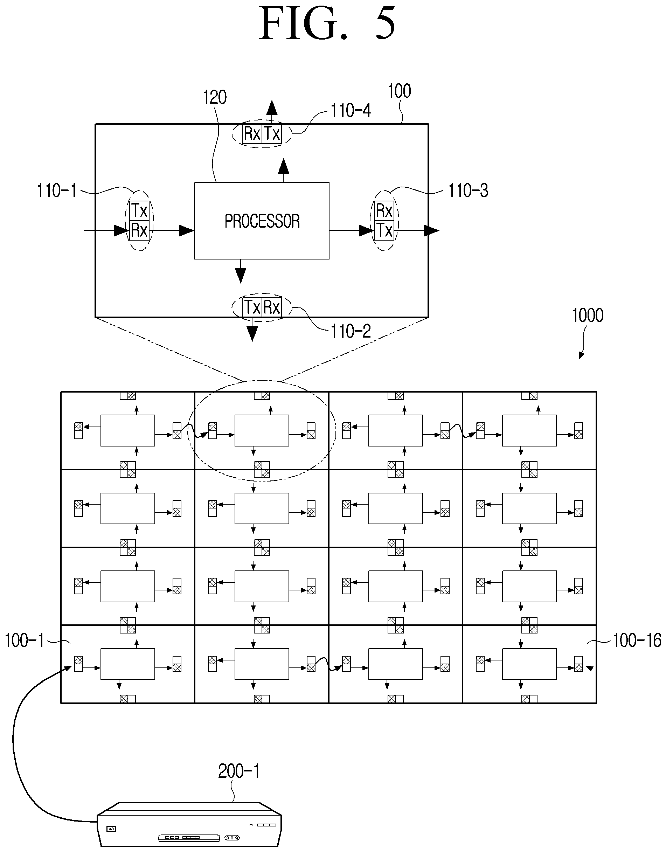

The processor 120 according to an embodiment of the disclosure may control remaining communication interfaces for the remaining communication interfaces from among the plurality of interfaces 110 to output the specific signal received through the first communication interface 110-1. Detailed descriptions thereof will be provided with reference to FIG. 5.

FIG. 5 is a diagram illustrating a transmission path of a specific signal according to an embodiment of the disclosure.

Referring to FIG. 5, the respective communication interfaces 110 provided in the display device 100 may be positioned at each of the four directions based on the front surface of the display device 100.

In an example, the first communication interface 110-1 may be positioned at a first direction from among the four directions. In another example, a second communication interface 110-2 may be positioned at a second direction from among three directions excluding the first direction from the four directions. The four directions may include the upper side, the lower side, the left side, and the right side based on the front surface of the display device.

Referring to FIG. 5, the processor 120 may identify, based on the specific signal transmitted by the main control box 200-1 being received through the first communication interface 110-1, the first communication interface 110-1 as the communication interface to which the signal is received along the main connection path.

In addition, the processor 120 may control the remaining communication interfaces for the remaining communication interfaces (e.g., second to fourth communication interfaces 110-2, 110-3, and 110-4) to output the specific signal received through the first communication interface 110-1.

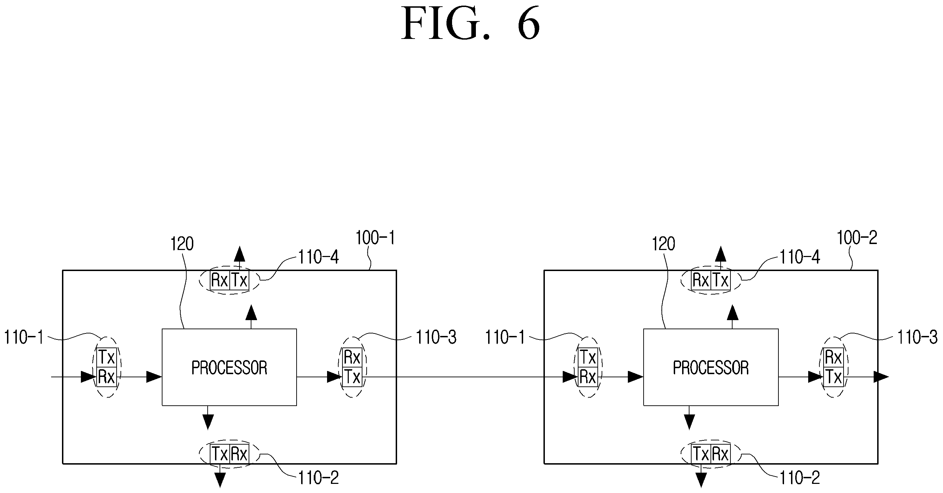

Any one signal from among the specific signals output by the respective remaining communication interfaces may be received by an adjacent another display device 100'. Detailed descriptions thereof will be provided with reference to FIG. 6.

Meanwhile, in FIG. 5, the respective communication interfaces 110 being constituted with receiving modules Rx and transmitting modules Tx have been shown for convenience of description, but this is one example and is not limited thereto.

FIG. 6 is a diagram illustrating a method for transmitting a specific signal to another display device by a display device according to an embodiment of the disclosure.

Referring to FIG. 6, the processor 120 provided in the first display device 100-1 may identify, based on the specific signal transmitted by the main control box 200-1 being received through the first communication interface 110-1, the first communication interface 110-1 as the communication interface to which the signal is received along the main connection path. Then, the processor 120 provided in the first display device 100-1 may control for the second to fourth communication interfaces 110-2, 110-3, and 110-4 to output the specific signal received through the first communication interface 110-1.

Then, the second display device 100-2 positioned adjacently to the first display device 100-1 may receive the specific signal output by the third communication interface 110-3 of the first display device 100-1 through the first communication interface 110-1.

The processor 120 provided in the second display device 100-2 may identify, based on the specific signal transmitted by the main control box 200-1 being receive through the first communication interface 110-1, the first communication interface 110-1 as the communication interface to which the signal is received along the main connection path.

Then, the processor 120 provided in the second display device 100-2 may control for the second to fourth communication interfaces 110-2, 110-3, and 110-4 provided in the second display device 100-2 to output the specific signal received through the first communication interface 110-1.

Meanwhile, the specific signal output by the second communication interface 110-2 and a fourth communication interface 110-4 of the first display device 100-1 may not be received by the adjacent another display device 100'. In an example, the specific signal output by the second communication interface 110-2 may not be transmitted anywhere because the another display device 100' connected to the first display device 100-1 through the second communication interface 110-2 is not present.

The processor 120 according to an embodiment of the disclosure may identify, based on a feedback signal indicating the receipt of the specific signal being received from the another display device 100' through the second communication interface 110-2 from among the remaining communication interfaces after the respective remaining communication interfaces (e.g., second to fourth communication interfaces 110-2, 110-3, and 110-4) output the specific signal, the second communication interface 110-2 as the communication interface for transmitting the signal along the main connection path.

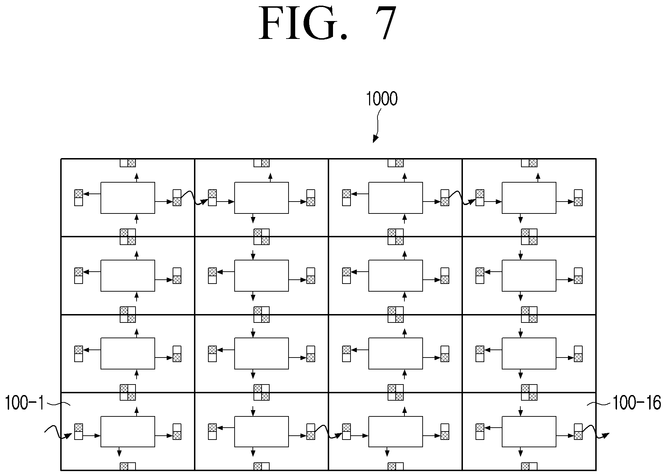

FIG. 7 is a diagram illustrating a method for identifying a connection path between display devices according to an embodiment of the disclosure.

Based on each of the first to sixteenth display devices 100-1, ..., 100-16 transmitting the specific signal through the remaining interfaces after receiving the specific signal transmitted by the main control box 200-1 through any one interface from among the plurality of interfaces 110 according to the method shown in FIG. 6, each of the first to sixteenth display devices 100-1, ..., 100-16 may identify the communication interface to which the signal is received along the main connection path from among the plurality of communication interfaces 110.

In FIG. 1 to FIG. 7, a method of identifying the communication interface to which the signal transmitted by the main control box 200-1 is received along the main connection path has been described, but according to various embodiments of the disclosure, the communication interface which receives the signal transmitted by the sub control box 200-2 along the sub connection path may also be identified.

In an example, the processor 120 may identify, based on the specific signal (e.g., a second specific signal) transmitted by the sub control box 200-2 being received through the second communication interface 110-2 from among the plurality of communication interfaces 110, the second communication interface 110-2 as the communication interface to which the signal is received along the sub connection path. Here, the sub connection path may be a connection path for sequentially transmitting the signal transmitted by the sub control box 200-2 to the respective display devices 100-1, ..., 100-n, and may have a reverse order relationship with the main connection path. For example, the solid line arrow as shown in FIG. 1 may indicate the main connection path, and the dotted line arrow may indicate the sub connection path.

The processor 120 according to an embodiment of the disclosure may identify, based on the plurality of signals being received through the plurality of communication interfaces 110, the signal received through the first communication interface 110-1 from among the plurality of signals. Then, the processor 120 may control the display device 100 based on the signal received through the first communication interface 110-1, and ignore the remaining signals.

In another example, the processor 120 may control, based on there being no signal received through the first communication interface 110-1 from among the plurality of signals, the display device 100 based on the signal received through the second communication interface 110-2 from among the plurality of signals. A summary of the above has been provided in a table as below.

**[Table 1]**

| input | | operation |
|---|---|---|
| first communication interface | second communication interface | |
| O | X | first communication interface |
| X | O | second communication interface |
| O | O | first communication interface |

Referring to Table 1, the processor 120 may control the display device 100 based on the signal received through the first communication interface 110-1, which receives the specific signal transmitted by the main control box 200-1 along the main connection path, rather than the set priority order.

In another example, the processor 120 may control the display device 100 based on the signal received through the second communication interface 110-2 only when there is no signal received through the first communication interface 110-1.

Here, the first communication interface 110-1 may be an interface that receives a first signal from a first another display device 100' adjacent to the display device 100 according to the control of the processor 120 or transmits a second signal to the first another display device 100'.

The second communication interface 110-2 may be an interface that receives the second signal from a second another display device 100" adjacent to the display device 100 or transmits the first signal to a second another display device 100' according to the control of the processor 120.

Here, the first signal may be signals (e.g., image signal, OSD menu display signal, other control signals, etc.) output by the main control box 200-1 and sequentially transmitted to the plurality of display devices 100-1, ..., 100-n, respectively, along the main connection path.

The second signal may be signals (e.g., image signal, etc.) output by the sub control box 200-2 and sequentially transmitted to the plurality of display devices 100-1, ..., 100-n, respectively, along the sub connection path. Here, a transmission order of the second signal may have a reverse order relationship with a transmission order of the first signal. For example, the first signal may be transmitted in an order from the first display device 100-1 to the nth display device 100-n, and the second signal may be transmitted in an order from the nth display device 100-n to the first display device 100-1.

Referring back to FIG. 2, the display device 100 according to an embodiment of the disclosure may further include a memory (not shown).

The memory according to an embodiment of the disclosure may store data necessary in various embodiments of the disclosure. The memory may be implemented in a form of a memory embedded to the display device 100 according to data storage use, or implemented in a form of a memory attachable to or detachable from the display device 100.

For example, data for driving of the display device 100 may be stored in the memory embedded to the display device 100, and data for an expansion function of the display device 100 may be stored in the memory attachable to or detachable from the display device 100. Meanwhile, the memory embedded to the display device 100 may be implemented as at least one from among a volatile memory (e.g., a dynamic RAM (DRAM), a static RAM (SRAM), or a synchronous dynamic RAM (SDRAM)), or a non-volatile memory (e.g., a one time programmable ROM (OTPROM), a programmable ROM (PROM), an erasable and programmable ROM (EPROM), an electrically erasable and programmable ROM (EEPROM), a mask ROM, a flash ROM, a flash memory (e.g., NAND flash or NOR flash), a hard disk drive (HDD) or a solid state drive (SSD)). In addition, the memory attachable to or detachable from the display device 100 may be implemented in a form such as, for example, and without limitation, a memory card (e.g., a compact flash (CF), a secure digital (SD), a micro secure digital (micro-SD), a mini secure digital (mini-SD), an extreme digital (xD), a multi-media card (MMC), etc.), an external memory (e.g., USB memory) connectable to a USB port, or the like.

The memory according to an example may store at least one instruction or a computer program including the instructions for controlling the display device 100.

Specifically, the memory may store a plurality of order information for the respective communication interfaces 110.

The processor 120 according to an embodiment of the disclosure may control, based on the plurality of signals being received through the plurality of communication interfaces 110, the display device 100 based on a signal received through a pre-set communication interface (e.g., a communication interface having a highest priority order) from among the plurality of signals according to priority order information stored in the memory. In addition, the processor 120 may ignore the remaining signals.

Meanwhile, the processor 120 may update, based on the specific signal transmitted by the main control box 200-1 being received through the first communication interface 110-1, the priority order corresponding to the first communication interface 110-1 in the priority order information.

For example, the processor 120 may identify, based on the specific signal transmitted by the main control box 200-1 being received through the first communication interface 110-1, the first communication interface 110-1 as the communication interface to which the signal is received along the main connection path, and update the priority order information for the first communication interface 110-1 to have the highest priority order from among the plurality of interfaces 110.

The display device 100 according to an embodiment of the disclosure may include a display, and the display may be implemented as a display including self-emissive devices or as a display including non-emissive devices and a backlight.

The display may be implemented as a display of various types such as, for example, and without limitation, a liquid crystal display (LCD), an organic light emitting diode (OLED) display, a light emitting diode (LED), a micro LED, a mini LED, a plasma display panel (PDP), a quantum dot (QD) display, a quantum dot light emitting diodes (QLED), or the like. In a display 130, a driving circuit, which may be implemented in the form of an a-si TFT, a low temperature poly silicon (LTPS) TFT, an organic TFT (OTFT), or the like, a backlight unit, and the like may be included. Meanwhile, the display 130 may be implemented as a touch screen coupled with a touch sensor, a flexible display, a rollable display, a three-dimensional display (3D display), a display physically coupled with a plurality of display modules, or the like.

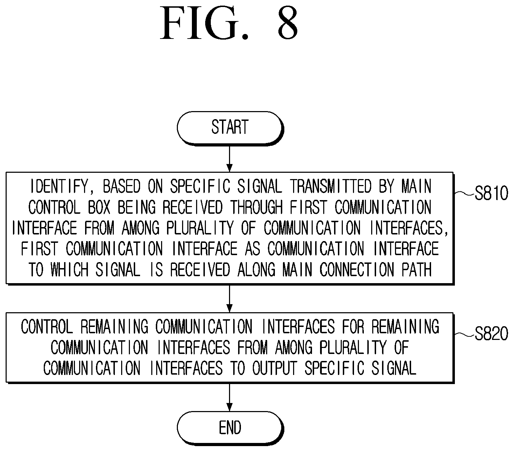

FIG. 8 is a flowchart illustrating a control method of a display device according to an embodiment of the disclosure.

A control method of the display devices included in the modular display device according to an embodiment may first include identifying, based on the specific signal transmitted by the main control box being received through the first communication interface from among the plurality of communication interfaces provided in the display device, the first communication interface as the communication interface to which the signal is received along the main connection path (S810).

Then, the remaining communication interfaces may be controlled for the remaining communication interfaces to output the specific signal from among the plurality of communication interfaces (S820).

Here, the main connection path may be a connection path for sequentially transmitting the signal transmitted by the main control box to the respective display devices.

The control method according to an embodiment of the disclosure may further include identifying, based on the specific signal transmitted by the sub control box being received through the second communication interface from among the plurality of communication interfaces, the second communication interface as the communication interface to which the signal is received along the sub connection path, and here, the sub connection path may be a connection path for sequentially transmitting the signal transmitted by the sub control box to the respective display devices, and may be in a reverse order relationship with the main connection path.

The control method according to an embodiment of the disclosure may further include identifying, based on the feedback signal indicating the receipt of the specific signal being received through the second communication interface from among the remaining communication interfaces after the respective remaining communication interfaces output the specific signal, the second communication interface as the communication interface for transmitting the signal along the main connection path.

The control method according to an embodiment of the disclosure may further include identifying, based on the plurality of signals being received through the plurality of communication interfaces, the signal received through the first communication interface from among the plurality of signals, and controlling the display device based on the signal received through the first communication interface and ignoring the remaining signals.

Here, if there is no signal received through the first communication interface from among the plurality of signals, controlling the display device based on the signal received through the second communication interface from among the plurality of signals may be further included.

The respective display devices according to an embodiment of the disclosure may be disposed in the matrix form, the respective communication interfaces may be positioned at each of the four directions based on the front surface of the display device, the first communication interface may be positioned at the first direction from among the four directions, the second communication interface may be positioned at the second direction from among the three directions excluding the first direction from among the four directions, and the four directions may include the upper side, the lower side, the left side, and the right side based on the front surface of the display device, and the method may include receiving the first signal from a first another display device adjacent to the display device through the first communication interface or transmitting the second signal to the first another display device, and receiving the second signal from a second another display device adjacent to the display device through the second communication interface or transmitting the first signal to the second another display device.

Here, the first signal may be a signal output by the main control box and sequentially transmitted to the respective display devices along the main connection path, and the second signal may be a signal output by the sub control box and sequentially transmitted to the respective display devices along the sub connection path.

The specific signal transmitted by the main control box according to an embodiment may include identification information for identifying the main connection path.

In addition, the display device may include the priority order information for the respective communication interfaces, and the control method according to an embodiment may include controlling, based on the plurality of signals being received through the plurality of communication interfaces, the display device based on the signal received through the pre-set communication interface from among the plurality of signals according to the priority order information, and updating, based on the specific signal transmitted by the main control box being received through the first communication interface, the priority order corresponding to the first communication interface in the priority order information.

However the various embodiments of the disclosure may be applied to not only an electronic device but also electronic devices of all types that include a display.

Meanwhile, the various embodiments described above may be implemented in a recordable medium which is readable by a computer or a device similar to the computer using software, hardware, or the combination of software and hardware. In some cases, embodiments described herein may be implemented by the processor itself. According to a software implementation, embodiments such as the procedures and functions described herein may be implemented with separate software modules. The respective software modules may perform one or more functions and operations described herein.

Computer instructions for performing processing operations of the electronic device according to the various embodiments of the disclosure described above may be stored in a non-transitory computer-readable medium. The computer instructions stored in this non-transitory computer-readable medium may cause a specific device to perform a processing operation of the electronic device 100 according to the above-described various embodiments when executed by a processor of the specific device.

The non-transitory computer readable medium may refer to a medium that stores data semi-permanently rather than storing data for a very short time, such as a register, a cache, a memory, or the like, and is readable by a device. Specific examples of the non-transitory computer readable medium may include, for example, and without limitation, a compact disc (CD), a digital versatile disc (DVD), a hard disc, a Blu-ray disc, a USB, a memory card, a read only memory (ROM), and the like.

While the disclosure has been illustrated and described with reference to various example embodiments thereof, it will be understood that the various example embodiments are intended to be illustrative, not limiting. It will be understood by those skilled in the art that various changes in form and details may be made therein without departing from the true spirit and full scope of the disclosure, including the appended claims and their equivalents.

## Claims

1. A display device comprised in a modular display device constituted with a plurality of display devices, the display device comprising:
a plurality of communication interfaces; and
at least one processor configured to
identify, based on a first specific signal transmitted by a main control box being received through a first communication interface from among the plurality of communication interfaces, the first communication interface as a communication interface to which a signal is received along a main connection path,
control remaining communication interfaces for the remaining communication interfaces from among the plurality of communication interfaces to output the first specific signal, and
identify, based on a second specific signal transmitted by a sub control box being received through a second communication interface from among the plurality of communication interfaces, the second communication interface as a communication interface to which a signal is received along a sub connection path,
wherein the main connection path is a connection path for sequentially transmitting a signal transmitted by the main control box to the plurality of display devices, respectively, and
the sub connection path is a connection path for sequentially transmitting a signal transmitted by the sub control box to the respective display devices, and is in a reverse order relationship with the main connection path.

2. The display device of claim 1, wherein
the at least one processor is configured to
identify, based on a feedback signal indicating a receipt of the first specific signal being received through the second communication interface from among the remaining communication interfaces after the respective remaining communication interfaces output the first specific signal, the second communication interface as a communication interface for transmitting the signal along the main connection path.

3. The display device of claim 1, wherein
the at least one processor is configured to
identify, based on a plurality of signals being received through the plurality of communication interfaces, a signal received through the first communication interface from among the plurality of signals, and
control the display device based on the signal received through the first communication interface and ignore the remaining signals.

4. The display device of claim 3, wherein
the at least one processor is configured to
control, based on there being no signal received through the first communication interface from among the plurality of signals, the display device based on the signal received through the second communication interface from among the plurality of signals.

5. The display device of claim 1, wherein
the respective display devices are disposed in a matrix form,
the respective communication interfaces are positioned at each of four directions based on a front surface of the display device,
the first communication interface is positioned at a first direction from among the four directions, and receives a first signal from a first another display device adjacent to the display device or transmits a second signal to the first another display device,
the second communication interface is positioned at a second direction from among three directions excluding the first direction from the four directions, and receives the second signal from a second another display device adjacent to the display device or transmits the first signal to the second another display device, and
the four directions comprise an upper side, a lower side, a left side, and a right side based on a front surface of the display device.

6. The display device of claim 5, wherein
the first signal is a signal output by the main control box and sequentially transmitted to the respective display devices along the main connection path, and
the second signal is a signal output by the sub control box and sequentially transmitted to the respective display devices along the sub connection path.

7. The display device of claim 1, wherein
the first specific signal transmitted by the main control box comprises identification information for identifying the main connection path.

8. The display device of claim 1, further comprising:
a memory stored with priority order information for the respective communication interfaces,
wherein the at least one processor is configured to
control, based on a plurality of signals being received through the plurality of communication interfaces, the display device based on a signal received through a pre-set communication interface from among the plurality of signals according to the priority order information, and
update, based on the first specific signal transmitted by the main control box being received through the first communication interface, a priority order corresponding to the first communication interface in the priority order information.

9. A control method of a display device comprised in a modular display device constituted with a plurality of display devices, the method comprising:
identifying, based on a first specific signal transmitted by a main control box being received through a first communication interface from among a plurality of communication interfaces provided in the display device, the first communication interface as a communication interface to which a signal is received along a main connection path;
controlling remaining communication interfaces for the remaining communication interfaces from among the plurality of communication interfaces to output the specific signal; and
identifying, based on a second specific signal transmitted by a sub control box being received through a second communication interface from among the plurality of communication interfaces, the second communication interface as a communication interface to which a signal is received along a sub connection path,
wherein the main connection path is a connection path for sequentially transmitting a signal transmitted by the main control box to the respective display devices, and
the sub connection path is a connection path for sequentially transmitting a signal transmitted by the sub control box to the respective display devices, and is in a reverse order relationship with the main connection path.

10. The method of claim 9, further comprising:
identifying, based on a feedback signal indicating a receipt of the first specific signal being received through the second communication interface from among the remaining communication interfaces after the respective communication interfaces output the first specific signal, the second communication interface as a communication interface for transmitting the signal along the main connection path.

11. The method of claim 9, further comprising:
identifying, based on a plurality of signals being received through the plurality of communication interfaces, a signal received through the first communication interface from among the plurality of signals; and
controlling the display device based on the signal received through the first communication interface and ignoring the remaining signals.

12. The method of claim 11, further comprising:
controlling, based on there being no signal received through the first communication interface from among the plurality of signals, the display device based on a signal received through the second communication interface from among the plurality of signals.

13. The method of claim 9, wherein
the respective display devices are disposed in a matrix form,
the respective communication interfaces are positioned at each of four directions based on a front surface of the display device,
the first communication interface is positioned at a first direction from among the four directions,
the second communication interface is positioned at a second direction from among three directions excluding the first direction from among the four directions, and
the four directions comprise an upper side, a lower side, a left side, and a right side based on a front surface of the display device, and
the method comprises
receiving a first signal from a first another display device adjacent to the display device through the first communication interface or transmitting a second signal to the first another display device; and
receiving the second signal from a second another display device adjacent to the display device through the second communication interface or transmitting the first signal to the second another display device.

14. The method of claim 13, wherein
the first signal is a signal output by the main control box and sequentially transmitted to the respective display devices along the main connection path, and
the second signal is a signal output by the sub control box and sequentially transmitted to the respective display devices along the sub connection path.

15. The method of claim 9, wherein
the first specific signal transmitted by the main control box comprises identification information for identifying the main connection path.
